**Europäisches Patentamt**

**European Patent Office**

**Office européen des brevets**

(19)

(11) Veröffentlichungsnummer : **0 343 399 B1**

(12) **EUROPÄISCHE PATENTSCHRIFT**

(45) Veröffentlichungstag der Patentschrift :
**21.10.92 Patentblatt 92/43**

(51) Int. Cl.⁵ : **D01H 9/00,** D01H 9/18,
B65H 67/02, B65G 9/00

(21) Anmeldenummer : **89107786.9**

(22) Anmeldetag : **28.04.89**

(54) **Hängefördersystem.**

(30) Priorität : **26.05.88 DE 3817910**

(43) Veröffentlichungstag der Anmeldung :
**29.11.89 Patentblatt 89/48**

(45) Bekanntmachung des Hinweises auf die
Patenterteilung :
**21.10.92 Patentblatt 92/43**

(84) Benannte Vertragsstaaten :
**CH DE ES FR GB IT LI**

(56) Entgegenhaltungen :
**WO-A-85/03277
CH-A- 264 791
DE-A- 3 601 832
DE-C- 932 478
US-A- 4 515 328
PATENT ABSTRACTS OF JAPAN vol. 11, no.
317 (C-452)(2764) 15 Oktober 1987, & JP-A-62
104934 (TOYODA AUTOM LOOM WORKS)**

(73) Patentinhaber : **VEIT TRANSPO GMBH
Rudolf-Diesel-Strasse 3
W-8910 Landsberg/Lech (DE)**

(72) Erfinder : **Lötzer, Karl
Pilgersheimerstrasse 51
W-8000 München 90 (DE)**
Erfinder : **Hafner, Josef, Dr. Ing.
Wettersteinstrasse 12
W-8910 Landsberg (DE)**

(74) Vertreter : **Patentanwälte Grünecker,
Kinkeldey, Stockmair & Partner
Maximilianstrasse 58
W-8000 München 22 (DE)**

EP 0 343 399 B1

## Beschreibung

Die Erfindung bezieht sich auf ein Hängefördersystem der im Oberberiff von Anspruch 1 erläuterten Art.

Ein Hängefördersystem der genannten Art ist beispielsweise aus der DE-A-30 34 477 bekannt. Bei dem bekannten Hängefördersystem werden die Spulen mit Hilfe von lösbaren Haltern zu mehreren an einem Förderzug (Laufwagen) befestigt, der in Querrichtung zum Austausch der Spulen in eine Ringspinnmaschine eingefahren werden kann. Damit können abgesponnene Spulen zwar automatisch oder im wesentlichen automatisch ausgewechselt werden, der Nachteil dabei ist jedoch, daß immer der gesamte Zug ausgewechselt werden muß, wenn die erste der Spulen des Zuges abgesponnen ist.

Zwar ist es bereits bekannt, Spulen im sogenannten "wilden Wechsel" auszutauschen, dies muß jedoch per Hand geschehen. Bei einem solchen Wechsel muß die Bedienperson immer dann, wenn eine leere oder leer werdende Spulenhülse festgestellt wird, diese per Hand aus dem Gatter nehmen und durch eine volle Spule ersetzen.

Der Erfindung liegt somit die Aufgbe zugrunde, ein Hängefördersystem der genannten Art derart auszugestalten, daß eine größere Flexibilität auch in der automatischen Handhabbarkeit der Spulen erreicht wird.

Die Aufgabe wird durch die kennzeichnenden Merkmale des Anspruchs 1 gelöst.

Durch die erfindungsgemäße Ausgestaltung kann jede der Spulen nach Bedarf bewegt werden, obwohl trotzdem noch eine automatisierte Zu- und Abfuhr der Spulen möglich ist, da das Laufmittel auch an der in die Verarbeitungsmaschine eingesetzten Spule verbleiben kann.

Anspruch 2 beschreibt eine besonders bevorzugte konstruktive Ausgestaltung eines Laufmittels.

Durch die Ausgestaltung nach Anspruch 3 ist es möglich, auch bereits vorhandene Spulen erfindungsgemäß nachzurüsten.

Die weitere Eingriffsfläche nach Anspruch 4 kann entweder für einen Eingriff mit einer weiteren Schiene oder für einen Antrieb der Spule oder zum Überführen in eine Weiche verwendet werden.

Als Antrieb ist das in Anspruch 5 beschriebene Reibseil, das das Laufmittel durch Reibeingriff mitnimmt, besonders geeignet.

Wenn sich die weitere Eingriffsfläche gemäß Anspruch 6 quer zur Schiene erstreckt, so kann beispielsweise das Laufmittel von der ersten Schiene auf eine weitere Schiene übergeben werden.

Die Ausgestaltung nach Anspruch 7 ist besonders für Spulen geeignet, die in Flyer eingesetzt werden, bei denen der Antrieb der Flyerflügel durch die Spulenhülse erfolgt. Außerdem können damit die Spulen auch an die bekannten Hängehalter angehängt und auf bekannte Hängefördersysteme überführt werden.

Durch die Ausgestaltung nach Anspruch 8 können nach Wunsch eine Anzahl Spulen zu Spulenzügen zusammengestellt werden.

Die Ausgestaltung nach Anspruch 9 stellt sicher, daß die Spulen immer einen genügenden Abstand zueinander einhalten, so daß die auf den Spulen aufgewickelten Fäden bzw. Faserstränge nicht beschädigt werden.

Die Ausgestaltung des Abstandshalters gemäß Anspruch 10 ist besonders dann von Vorteil, wenn die Spulen in eine Ringspinnmaschine eingesetzt werden. Durch die nur über Stege mit dem Laufmittel verbundene Anschlagfläche wird der Luftaustausch über den Spinnplätzen nicht wesentlich gestört, so daß sich keine Flusen oder Fasern ansammeln können.

Durch die Ausgestaltung nach Anspruch 11 können die Abstände der Spulen zueinander variiert und beispielsweise auf unterschiedliche Maschinenabstände im Flyer bzw. der Ringspinnmaschine eingestellt werden.

Diese unterschiedlichen Abstände können beispielsweise durch eine elliptische Anschlagfläche oder durch die Maßnahme nach Anspruch 12 erreicht werden, die darüber hinaus den Vorteil hat, daß die Vorsprünge und Ausnehmungen in der Ausgestaltung nach Anspruch 13 gleichzeitig als Koppelungsvorrichtung verwendet werden können.

Durch die Ausgestaltung nach Anspruch 14 können Spulen zugweise transportiert werden, ohne daß ihre individuelle Transportierbarkeit verloren geht.

Mit der Ausgestaltung nach Anspruch 15 können auch herkömmliche Spulen im erfindungsgemäßen Hängefördersystem verwendet werden, so daß es bei einem Nachrüsten eines Spinnereibetriebes nicht notwendig ist, auch alle vorhandenen Spulen auszutauschen.

Anspruch 16 beschreibt ein besonders bevorzugtes Konstruktionsprinzip des Laufmittels als sogenannter "Innenläufer".

Mit diesem Innenläufersystem kann beispielsweise die konstruktiv besonders einfache Weiche aus Anspruch 17 verwirklicht werden.

Durch die Ausgestaltung nach Anspruch 18 kann diese Weiche durch das Laufmittel selbst betätigt werden.

Mit dem Innenläufersystem ist auch die konstruktiv besonders einfache Kreuzung gemäß Anspruch 19 möglich.

Das erfindungsgemäß ausgebildete Hängefördersystem ist von besonderem Vorteil gemäß Anspruch 20 für eine Quereinfahrt in das Gatter einer Ringspinnmaschine zu verwenden. Wenn die Lunten der in eine Ringspinnmaschine eingesetzten Spulen nacheinander angeknüpft werden, so ist im wesentlichen auch die zuerst angeknüpfte Spule zuerst leer. Bei Verwendung des erfindungsgemäßen Hängefördersystems kann diese Spule individuell und auf einfache Weise durch eine volle Spule ersetzt werden, ohne daß der gesamte Zug verfahren werden muß.

Dabei wird bevorzugt für jede Querreihe von Spulenplätzen nach Anspruch 21 eine eigene Querschiene verwendet, wobei jede der Querschienen gemäß Anspruch 22 mit einer gemeinsamen Abzugsschiene und gemäß Anspruch 23 mit einer gemeinsamen Zulieferschiene verbunden ist.

Wird die Zulieferschiene gemäß Anspruch 24 in einer geschlossenen Bahn um die Ringspinnmaschine herumgeführt, so kann die Zulieferschiene als Reservestrecke verwendet werden, auf der volle Spulen so lange umlaufen, bis sie gebraucht werden.

Durch die Ausgestaltung nach Anspruch 25 können die Spulen im Inneren des Gatters sowohl in Quer- als auch in Längsrichtung in bezug zur Ringspinnmaschine gefördert werden, so daß jeder Spulenplatz nicht nur durch seine ihm zugeordnete Querschiene sondern auch über, theoretisch, alle Querschienen beschickt werden kann. Durch diese Ausgestaltung kann der Betreiber nach Bedarf wählen, welche Art des Spulenwechsels eingesetzt wird, ob Quer- oder Längseinfahrt, zugweise oder einzeln, so daß die Flexibilität der Spulenhandhabung weiter erhöht wird. Diese Ausgestaltung ist konstruktiv besonders einfach mit der Schiene nach Anspruch 16 und der Weiche bzw. der Kreuzungsstelle nach den Ansprüchen 17 bis 19 zu verwirklichen.

Durch die Ausgestaltungen nach den Ansprüchen 26 und 27 kann jeder Spulenplatz automatisch mit einer vollen Spule beschickt werden.

Anspruch 28 beschreibt eine für das erfindungsgemäße Hängefördersystem einsetzbare Spule.

Ausführungsbeispiele der Erfindung werden nachfolgend anhand der Zeichnungen näher erläutert. Es zeigen:

Fig. 1 eine teilweise geschnittene Seitenansicht eines ersten Ausführungsbeispiels einer Spule,

Fig. 2 eine Teildraufsicht auf Fig. 1,

Fig. 3 ein weiteres Ausführungsgbeispiel eines Abstandshalters,

Fig. 4 ein weiteres Ausführungsbeispiel einer Spule im Teilschnitt,

Fig. 5 ein weiteres Ausführungsbeispiel einer Spule,

Fig. 6 ein weiteres Ausführungsbeispiel einer Spule mit zwischengeschaltetem Halter,

Fig. 7 ein weiteres Ausführungsbeispiel einer Spule,

Fig. 8 eine schematische Darstellung des erfindungsgemäßen Hängefördersystems in einer Ringspinnmaschine,

Fig. 9 die Darstellung einer Querschiene im Gatter der Ringspinnmaschine,

Fig. 10 eine Seitenansicht einer Weiche,

Fig. 11 die Draufsicht auf die Weiche nach Fig. 10,

Fig. 12 die perspektivische Darstellung einer Kreuzungsstelle, und

Fig. 13 die Seitenansicht einer weiteren Weiche.

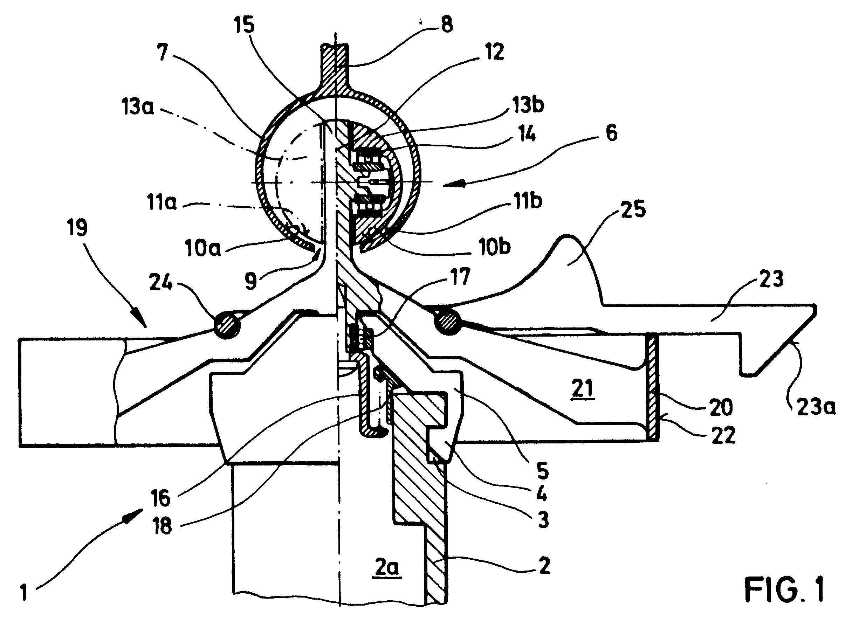

Aus Fig. 1 ist eine erfindungsgemäße Spule 1 ersichtlich, die eine üblicherweise mit einer Durchgangsbohrung 2a versehene, hohle Spulenhülse 2 aufweist. Die auf der Spulenhülse 2 aufgewickelten Fäden oder Faserstränge sind aus Übersichtlichkeitsgründen nicht gezeichnet. Im oberen Bereich der Spulenhülse 2 ist eine Ringnut 3 eingearbeitet, in die ein hakenförmiger Vorsprung 4 eines Halteteiles 5 einrastend eingreift. Das Halteteil kann jedoch auch einstückig mit der Spulenhülse ausgebildet sein. Das Halteteil 5 gehört zu einem Laufmittel 6, mit dem die Spule 1 individuell auf einer Schiene 7 transportiert werden kann. Die Schiene 7 besteht aus einem Rohr, das mit einem Befestigungssteg 8 versehen ist und an seiner unteren Seite über seine gesamte Länge einen Schlitz 9 aufweist. Im Inneren der rohrförmigen Schiene 7, beidseitig des Schlitzes 9, sind zwei Laufbahnen 10a und 10b angeordnet, mit denen Laufflächen 11a bzw. 11b in Eingriff treten. Die Laufflächen 11a, 11b sind jeweils an einer an einem Tragteil 12 des Laufmittels 6 angeordneten Halbkugelschale 13a bzw. 13b angeordnet und über Kugellager 14 an einem Mittelsteg 15 dieses Tragteiles 12 drehbar gelagert. Der Mittelsteg 15 erstreckt sich durch den Schlitz 9, wobei die Laufflächen 11a bzw. 11b die Laufbahnen 10a bzw. 10b der Schiene 7 von innen nach außen übergreifen. Unterhalb des Schlitzes 9 erstreckt sich der Mittelsteg 15 mit einer Verlängerung 16 in das Innere der Spulenhülse 2 hinein. Die Verlängerung 16 ist wiederum über ein Kugellager 17 am Halteteil 5 abgestützt. Weiterhin ist zwischen der Verlängerung 16 und dem Halteteil 5 eine der üblichen Federbremsen 18 vorgesehen, die die Spulenhülse 2 abbremst, so daß diese sich nur dann dreht, wenn am Faden ein Zug ausgeübt wird.

Zwischen dem Halteteil 5 und den Halbkugelschalen 13 ist am Mittelsteg 15 ein Abstandshalter 19 vorgesehen. Der Abstandshalter 19 enthält einen Ring 20, der über Stege 21 mit dem Mittelsteg 15 des Laufmittels 6 verbunden ist. An der Außenfläche des Ringes 20 ist eine Anschlagfläche 22 vorgesehen, die zum Anschlag an eine weitere Anschlagfläche 22 eines Abstandshalters 19 einer benachbarten Spule 1 ausgebildet ist.

Am Abstandshalter 19 ist weiterhin eine Koppelungsvorrichtung in Form eines Hakens 23 vorgesehen, der über ein Schwenk- und Drehgelenk 24 mit dem Abstandshalter 19 derart verbunden ist, daß er sowohl aus der in Fig. 1 gezeichneten, unwirksamen Stellung um den Mittelsteg 15 in einer waagerechten Ebene in eine Stellung verschwenkt werden kann, in der der Haken 23 parallel zum Schlitz 9 verläuft, als auch in vertikaler Richtung verschwenkbar ist, so daß der Haken 23 über den Ring 20 eines benachbarten Abstandshalters 19 einer nachlaufenden Spule 1 gehoben werden kann. Dabei enhält der Haken 23 eine Auflauffläche 23a, so daß beim Anstoßen an einen Ring 20 der Haken 23 selbsttätig angehoben wird und durch sein eigenes Gewicht hinter dem benachbarten Ring 20 zurückfällt. Am Haken 23 kann weiterhin eine Flosse 25 befestigt sein, mit der die fluchtende Ausrichtung der Spulen 1 bzw. Haken 23 zum Koppeln kontrolliert werden kann.

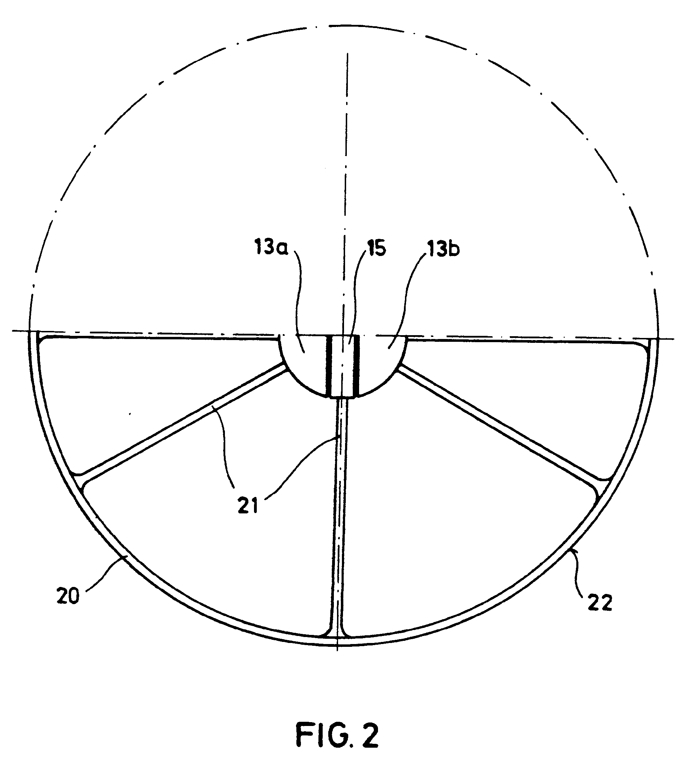

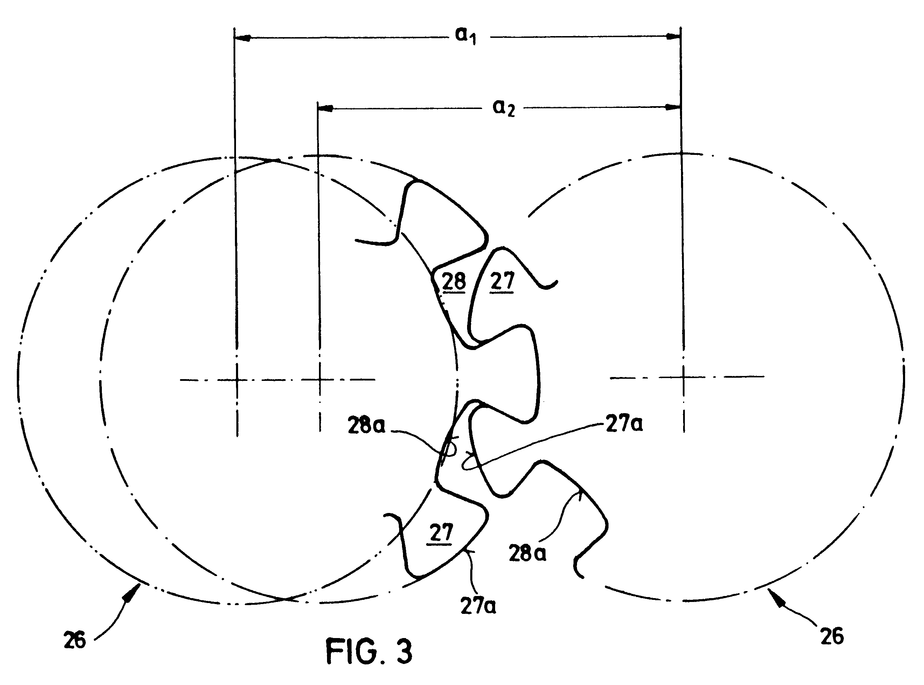

In Fig. 3 ist in schematischer Darstellung ein abgewandelter Abstandshalter 26 ersichtlich. Der Abstandshalter 26 ist entweder tellerförmig oder, analog Fig. 2, als Speichenring ausgebildet. Am Umfang des Abstandshalters 26 sind Vorsprünge 27 und Ausnehmungen 28 vorgesehen. Dabei bilden die Stirnflächen der Vorsprünge 27 einen ersten Bereich 27a einer Anschlagfläche und die Grundflächen der Ausnehmungen 28 einen zweiten Bereich 28a der Anschlagflächen des Abstandshalters 26. Vorsprünge 27 und Ausnehmungen 28 sind deckungsgleich ausgebildet. Die Vorsprünge 27 verbreitern sich in einer Richtung von der Mittellinie zur Stirnfläche, während sich die Ausnehmungen 28 in der gleichen Richtung verschmälern. Der Abstandshalter 26 ist zumindest im Bereich der Vorsprünge und/oder der Ausnehmungen aus einem elastischen Material gefertigt. Stoßen nun zwei hintereinanderliegende Abstandshalter 26 mit einer geringeren Kraft aneinander, so werden sich die Stirnflächen 27a der Vorsprünge beider Abstandshalter 26 berühren. Die Abstandshalter 26 werden somit die zugehörigen Spulen 1 in einem Abstand $a_1$ zueinander halten, der dem doppelten Abstand zwischen der Stirnfläche 27a und dem Mittelpunkt des Abstandshalters 26 entspricht. Werden die hintereinanderlaufenden Abstandshalter 26 mit einer gewissen Kraftaufwendung gegeneinander gedrückt oder angehoben, so drücken sich die Vorsprünge 27 in die Ausnehmungen 28 des jeweils benachbarten Abstandshalters. Damit schlagen die Stirnflächen 27a an die Grundflächen 28a der Ausnehmungen 28 an, wodurch die zugehörigen Spulen einen Abstand $a_2$ zueinander einnehmen, der der Summe der Entfernung Mittelpunkt-Stirnfläche 27a plus dem Abstand Mittelpunkt-Grundfläche 28a entspricht. Gleichzeitig verrasten sich Vorsprünge und Ausnehmungen ineinander, so daß eine Koppelung der hintereinanderliegenden Abstandshalter 26 erreicht wird.

Beide Abstandshalter 19 bzw. 26 können, wie gezeichnet, mit einem im wesentlichen kreisförmigen Umfang ausgebildet sein. Es ist jedoch auch möglich, beide Abstandshalter elliptisch auszubilden, so daß beim Abstandshalter nach Fig. 2 zwei Abstände und beim Abstandshalter in Fig. 3 vier mögliche Abstände erreicht werden können.

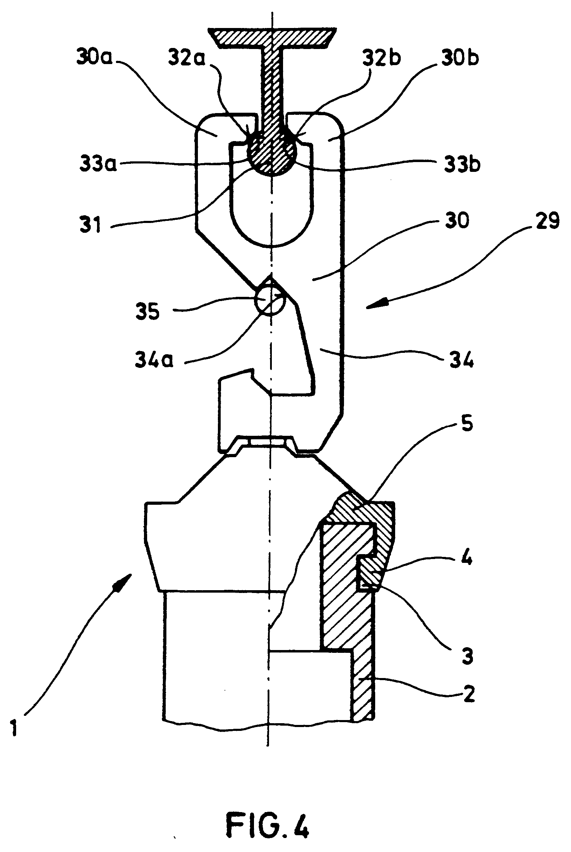

Fig. 4 zeigt ein weiteres Ausführungsbeispiel einer erfindungsgemäßen Spule 1, wobei gleiche bzw. vergleichbare Teile mit den gleichen Bezugszeichen bezeichnet wurden. Es ist ein Laufmittel 29 ersichtlich, das ein wiederum drehbar mit dem bereits beschriebenen Halteteil 5 verbundenes Tragteil 30 enthält, das als sogenannter Außenläufer ausgebildet ist. Das Tragteil 30 umgreift mit zwei Armen 30a, 30b von außen nach innen eine im wesentlichen stabförmige Schiene 31, wobei die Arme 30a, 30b mit jeweils einer Lauffläche 32a und 32b auf jeweils einer nach oben weisenden Laufbahn 33a bzw. 33b der Schiene 31 aufliegen.

Zwischen den Armen 30 und dem Halteteil 5 enthält das Tragteil 30 weiterhin einen C-förmigen Arm 34, der in Fig. 4 mit quer zur Schiene 31, d.h. zur Seite, gerichteter Öffnung angeordnet ist. Im oberen Bereich des C-förmigen Armes 34 ist eine senkrecht nach unten weisende, weitere Eingriffsfläche 34a vorgesehen, an der ein Reibseil 35 angreifen kann. Das Reibseil 35 ist beispielsweise um zwei Rollen endlos geführt und angetrieben, so daß das Laufmittel 29 durch den Reibeingriff zwischen dem Reibseil 35 und der weiteren Eingriffsfläche 34a mitgenommen werden kann. Selbstverständlich ist das Laufmittel 29 derart konstruiert, daß der Schwerpunkt der Spule 1 senkrecht unterhalb der Schiene 31 liegt, wobei zweckmäßigerweise auch die weitere Eingriffsfläche 34a sich senkrecht unterhalb der Schiene 31 befindet, so daß durch den Reibseilantrieb 35 keine seitlichen Kräfte auf die Spule 1 aufgebracht werden.

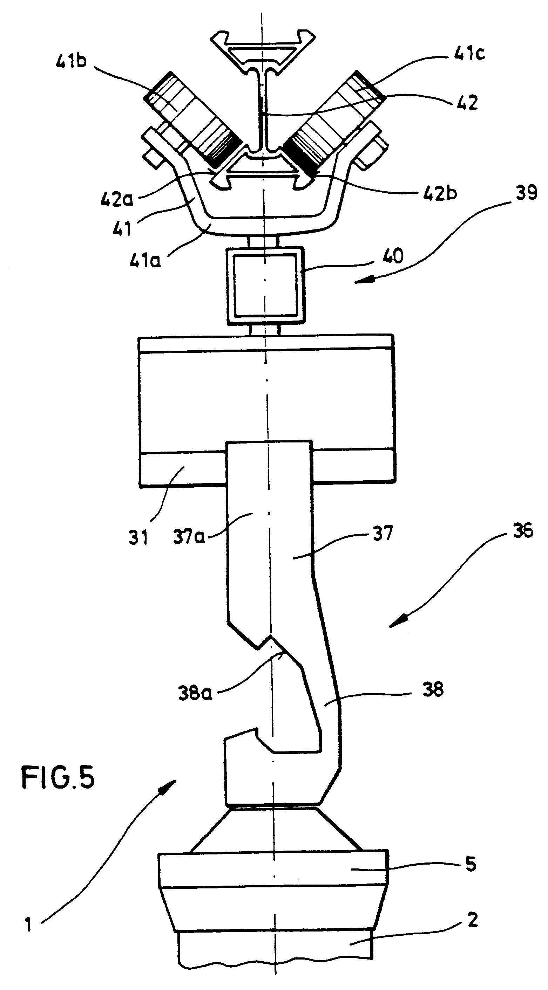

Aus Fig. 5 ist ein weiteres Ausführungsbeispiel einer Spule 1 ersichtlich, wobei für gleiche bzw. vergleichbare Bauteile wiederum die gleichen Bezugszeichen verwendet werden. Die Spule 1 enthält somit ein Laufmittel 36, das aus dem Halteteil 5 und einem drehbar mit dem Halteteil 5 verbundenen Tragteil 37 besteht. Das Tragteil 37 ist analog dem Tragteil 30 der Fig. 4 mit zwei die Schiene 31 von außen nach innen umgreifenden Armen versehen, von denen in der Seitenansicht der Fig. 5 nur der Arm 37a sichtbar ist. Das Laufmittel 36 weist weiterhin einen C-förmigen Arm 38 auf, der jedoch mit seiner Öffnung in Förderrichtung der Schiene 31 weist, d.h. gegenüber dem C-förmigen Arm 34 der Fig. 4 um 90° versetzt angeordnet ist. Der C-förmige Arm 38 weist in seinem oberen Bereich eine weitere Eingriffsfläche 38a auf, mit der das Laufmittel 36 z.B. auf eine quer zur Schiene 31 verlaufende, weitere Schiene oder auf ein quer zur Schiene 31 verlaufendes Reibseil aufgesetzt werden kann, so daß die Förderrichtung des Laufmittels 36 geändert wird.

Als Schiene 31 wird nur ein Teilstück des Schienenprofils verwendet, wobei dieses an einem weiteren Laufmittel 39, und zwar quer zu dessen Laufrichtung, angeordnet ist. Im dargestellten Ausführungsbeispiel wird als weiteres Laufmittel 39 einer der üblichen Trolleys verwendet, die aus zwei durch eine Quertraverse 40 verbundenen Betriebsmitteln 41 bestehen. Jedes Betriebsmittel 41 weist zwei durch einen Bügel 41a verbundene Laufrollen 41b bzw. 41c auf, die im Winkel zueinander angeordnet sind und auf einer Schiene 42 laufen, deren Laufbahnen 42a bzw. 42b unter eben diesem Winkel zueinander geneigt sind. An der Quertraverse 40 sind bevorzugt eine Vielzahl Teilstücke der Schiene 31 befestigt, so daß mit dem Trolley 39 eine Vielzahl Spulen 1 transportiert werden können.

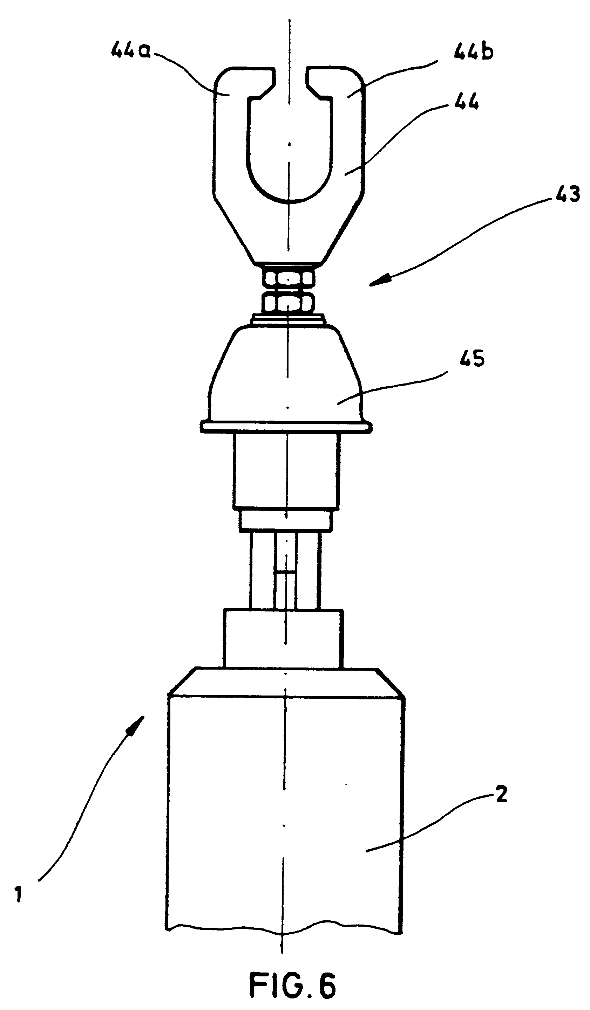

Ein weiteres Ausführungsbeispiel der erfindungsgemäßen Spule ist in Fig. 6 ersichtlich. Die Spule 1 weist wiederum ein Laufmitttel 43 mit einem Tragteil 44 auf, das mit zwei analog den Armen 30a, b, bzw. 37a, b ausgebildeten Armen 44a, 44b beispielsweise eine Schiene 31 umgreift. Als Halteteil wird jedoch ein lösbarer Halter 45 verwendet. Für diesen Zweck sind z.B. die bekannten im Handel erhältlichen Hängehalter geeignet. Dieser Halter 45 greift in die Durchgangsbohrung 2a der Spule 2 ein, klemmt diese fest, erlaubt jedoch eine Drehbewegung der Spule. Mit dem Laufmittel 43 ist es somit möglich, die vorhandenen Spulenbestände weiter zu verwenden.

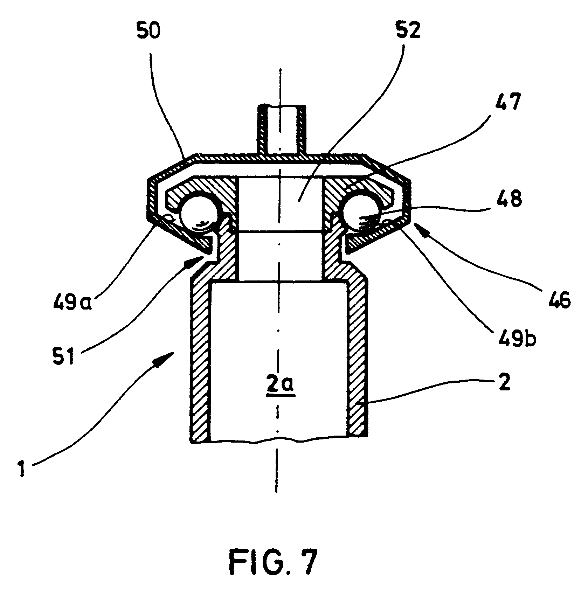

Ein weiteres Ausführungsbeispiel einer Spule 1 ist aus Fig. 7 ersichtlich. In diesem Ausführungsbeispiel wird ein Laufmittel 46 verwendet, bei dem Halte- und Tragteil als Käfig 47 für einen Kranz Laufkugeln 48 ausgebildet sind. Der Käfig 47 ist als Innenläufer ausgebildet; d.h. die Kugeln 48 stehen nach außen unten vor und übergreifen von innen nach außen jeweils eine Laufbahn 49a, 49b, die beidseitig eines Schlitzes 51 in einer Schiene 50 angeordnet sind. Die Schiene 50 kann entweder den dargestellten, abgeschrägt flach ovalen oder den bereits beschriebenen rohrförmigen Querschnitt aufweisen. Der Käfig 47 weist koaxial mit der Mittellinie der Spulenhülse 2 eine Durchgangsbohrung 52 auf, die im wesentlichen mit der Durchgangsbohrung 2a der Spulenhülse 2 fluchtet. Dadurch kann die in Fig. 7 dargestellte Spule mit dem Laufmittel 46 nach Bedarf beispielsweise auch mit dem Halter 45 der Fig. 6 verwendet oder in Flyer eingesetzt werden, bei denen der Antrieb der Flyerflügel durch die Durchgangsbohrung der Spulenhülse erfolgt.

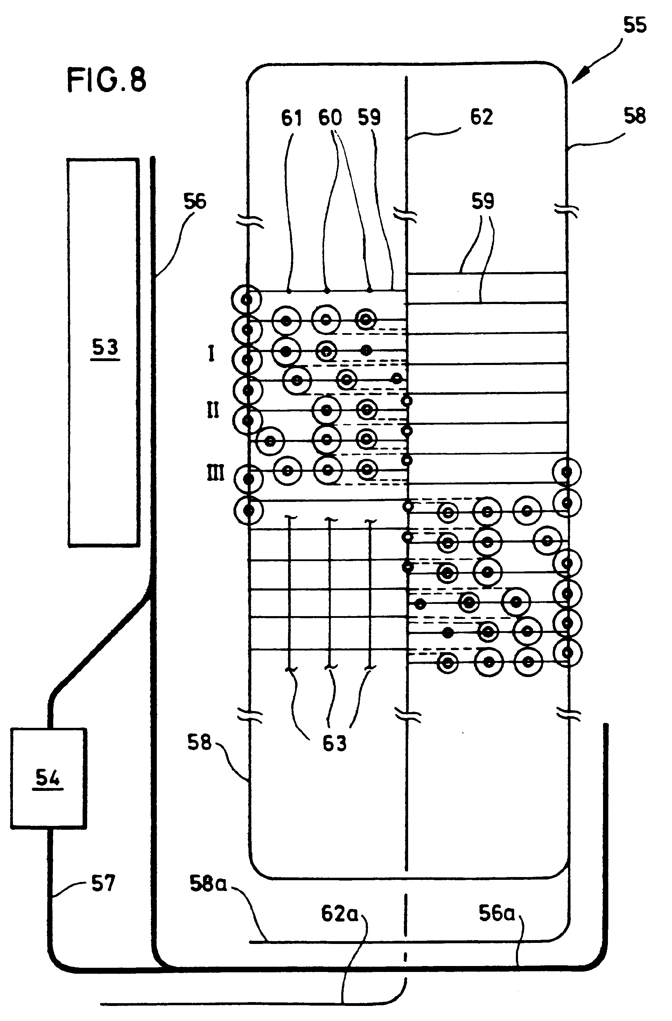

In Fig. 8 ist die Anwendung des erfindungsgemäßen Hängefördersystems in einer Spinnerei gezeigt. In schematischer Darstellung soll mit dem Bezugszeichen 53 ein Flyer, mit dem Bezugszeichen 54 eine Putzstation und mit dem Bezugszeichen 55 eine Ringspinnmaschine (nicht maßstabsgetreu) angedeutet werden. Vor dem Flyer 53 befindet sich ein erster Schienenstrang 56, der vom Flyer 53 zur Ringspinnmaschine 55 führt und dort in einer Staustrecke 56a endet. Die Putzstation 54 ist über eine Umgehungsschleife 57 mit dem ersten Schienenstrang 56 verbunden. Um die Ringspinnmaschine herum führt im geschlossenen Bogen ein zweiter Schienenstrang 58, der als Zuführstrecke für die Ringspinnmaschine 55 ausgebildet ist. Der zweite Schienenstrang 58 kann entweder direkt mit der Staustrecke 56a des ersten Schienenstranges 56 verbunden sein; er kann jedoch auch eine dargestellte Ladestrecke 58a aufweisen, die in der Nähe der Staustrecke 56a, bevorzugt parallel zu dieser, angeordnet ist. Vom zweiten Schienenstrang 58 zweigen eine Vielzahl von Querschienen 59 ab, die vom zweiten Schienenstrang 58 leicht nach unten geneigt beidseitig der Längsmittellinie der Ringspinnmaschine direkt in das Gatter hineinführen. Aus Gründen der Übersichtlichkeit sind nur einige Querschienen eingezeichnet und bezeichnet, es ist jedoch für jede senkrecht zur Längsachse der Ringspinnmaschine 55 angeordnete Reihe von Spulenplätzen 60 (durch Punkte angedeutet) eine eigene Querschiene 59 vorhanden. Auf jeder Querschiene 59 sind außer den Spulenplätzen 60 noch jeweils ein Reserveplatz 61 für eine Spule vorgesehen, der zwischen den Spulenplätzen 60 und der Zufuhrstrecke 58 liegt. In der Längsmittelachse der Ringspinnmaschine 55 ist ein dritter Schienenstrang 62 vorgesehen, der als Abzugsstrecke dient und mit den Querschienen 59 auf beiden Seiten der Ringspinnmaschine 55 verbunden ist, so daß leere Spulenhülsen von beiden Seiten der Ringspinnmaschine 55 über die Abzugsstrecke 62 abgeführt werden können. Auch die Abzugsstrecke 62 kann entweder direkt mit dem ersten Schienenstrang 56, und insbesondere mit der Umgehungsschleife 57, verbunden sein, oder aber die in der Figur dargestellte Entladestrecke 62a aufweisen, die in der Nähe der Staustrecke 56a des ersten Schienenstranges und parallel zu dieser angeordnet ist.

Im Inneren des Gatters der Ringspinnmaschine 55 sind weitere Längsschienen 63 vorgesehen, die aus Gründen der Übersichtlichkeit wiederum nur in einem Teil der Ringspinnmaschine eingezeichnet wurden. Die Längsschienen 63 verlaufen im wesentlichen parallel zur Zulieferstrecke 58 bzw. zur Abzugsstrecke 62 und verbinden alle Querschienen 59 miteinander.

Beim Betrieb des erfindungsgemäßen Hängefördersystems werden zunächst die im Flyer 53 mit dem Faserstrang bzw. dem Faden versehenen, erfindungsgemäß ausgerüsteten Spulen 1 auf den Schienenstrang 56 überführt. Dies kann manuell oder mit Hilfe der bekannten Doffer geschehen. Für den Schienenstrang 56 wird das aus Fig. 5 ersichtliche Schienenprofil 42 verwendet, auf dem normale Trolleys 39 laufen können. Die erfindungsgemäßen Spulen 1 werden an diese Trolleys gehängt, beispielsweise mit Hilfe einer der bekannten Halter 45 oder der weiteren Eingriffsfläche 34a bzw. 38a. Der komplette Zug der Spulen aus dem Flyer 53 wird danach in die Staustrecke 56a verfahren, wo jede der Spulen 1 einzeln entweder automatisch oder manuell auf die Ladestrecke 58a des zweiten Schienenstranges 58 umgeladen wird. Dabei werden für die Ladestrecke 58a und den zweiten Schienenstrang 58 Schienenprofile verwendet, auf denen die Spule 1 mit ihrem eigenen Laufmittel laufen kann. Die Spulen 1 werden von der Ladestrecke 58a auf den zweiten Schienenstrang 58 überführt und laufen dort im Kreislauf um die Ringspinnmaschine 55 herum. Dabei werden zunächst vom zweiten Schienenstrang 58 in jede der Querschienen 59 so viele Spulen abgezogen, bis alle Spulenplätze 60 und der Reserveplatz 61 auf der Querschiene 59 besetzt sind. Dabei werden in der Reihenfolge der Besetzung, d.h. die innere Spule zuerst, die Lunten angeknüpft.

Durch die Reihenfolge des Anknüpfens der Lunte wird die der Abzugsstrecke 62 am nächsten hängende Spule zuerst leer. Geschieht dies, wie in Reihe I ersichtlich, so wird die Lunte der Spule auf dem entsprechenden Reserveplatz 61, wie gestrichelt eingezeichnet, umgeknüpft. Dann wird die leere Spule auf die Abzugsstrecke 62 bewegt, während die übrigen, sich noch auf derselben Querschiene 59 befindenden Spulen nachrücken. Der Endzustand ist in der Reihe II ersichtlich. Auf dem nun freigewordenen Reserveplatz 61 wird eine volle Spule von der Zulieferstrecke 58 geleitet, so daß sich nach Beendigung dieses Vorgangs das in der Reihe III ersichtliche Bild ergibt.

Durch die Anordnung der zusätzlichen Längsschienen 63 ist es darüber hinaus möglich, leere und volle Spulen 1 nach Bedarf umzuleiten oder im Zickzack zu führen, so daß in fast beliebiger Weise jeder Spinnplatz und jeder Reserveplatz von einem anderen Spinnplatz bzw. einem anderen Reserveplatz erreicht werden kann. Darüber hinaus ist es auch möglich, z.B. Spulenzüge wie im Stand der Technik üblich komplett längs oder quer aus- bzw. einzufahren.

Sind genügend leere Spulen auf der Abzugsstrecke 62 angesammelt, so werden diese auf der Entladestrecke 62a wieder auf die Staustrecke 56a des ersten Schienenstranges umgeladen, von wo sie über die Umgehungsschleife 57 in die Putzstation 54 gefahren, dort von den Luntenresten befreit und wieder zum Flyer 53 verbracht und in diesen eingesetzt werden.

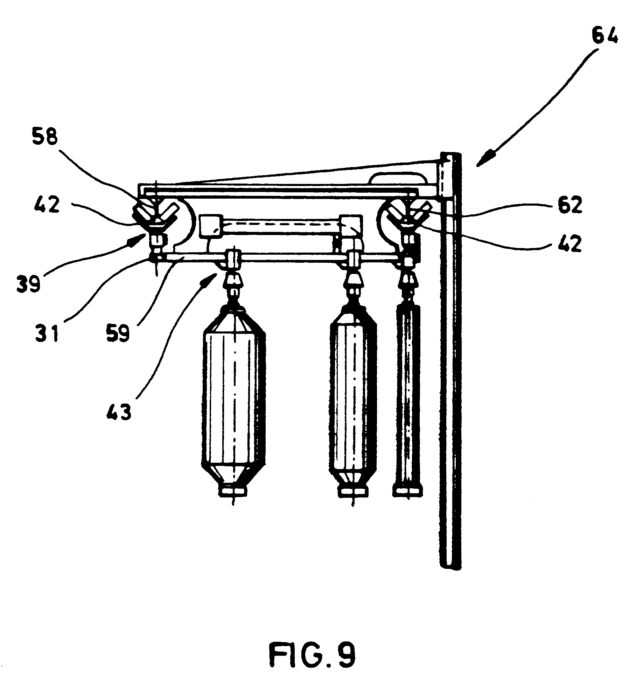

Fig. 9 zeigt die Seitenansicht eines etwas vereinfachten Ausführungsbeispieles. Von der Ringspinnmaschine 55 ist lediglich das Gatter 64 dargestellt. Sowohl die Zulieferstrecke 58 als auch die Abzugsstrecke 62 enthalten die Schienen 42 gemäß Fig. 5. Auf den Schienen 42 laufen Trolleys 39 mit quer angeordneten Schienen 31. Auf den Schienen 31 laufen Spulen 1 mit dem in Fig. 6 dargestellten Laufmittel 43. Sowohl der zweite Schienenstrang der Zulieferstrecke 58 als auch der dritte Schienenstrang der Abzugsstrecke 62 sind identisch mit der ersten Schienenstrecke 56 ausgebildet und direkt mit dieser verbunden. Die vollen Spulen 1 kommen zugweise vom Flyer 53 und werden direkt in die Zulieferstrecke 58 eingefahren. Jedesmal, wenn eine der Schienen 31 mit einer noch nicht vollbesetzten Querschiene 59 fluchtet, wird eine volle Spule auf die Querschiene 59 überführt, wobei im dargestellten Ausführungsbeispiel nur die beiden Spulenplätze und kein Reserveplatz vorgesehen ist. Leere Spulen werden nach innen geschoben und gelangen wiederum auf Schienen 31, die an Trolleys 39 befestigt sind. Die Trolleys 39 mit den leeren Spulen können dann von der Abzugsstrecke 62 in die Putzstation 54 verfahren werden.

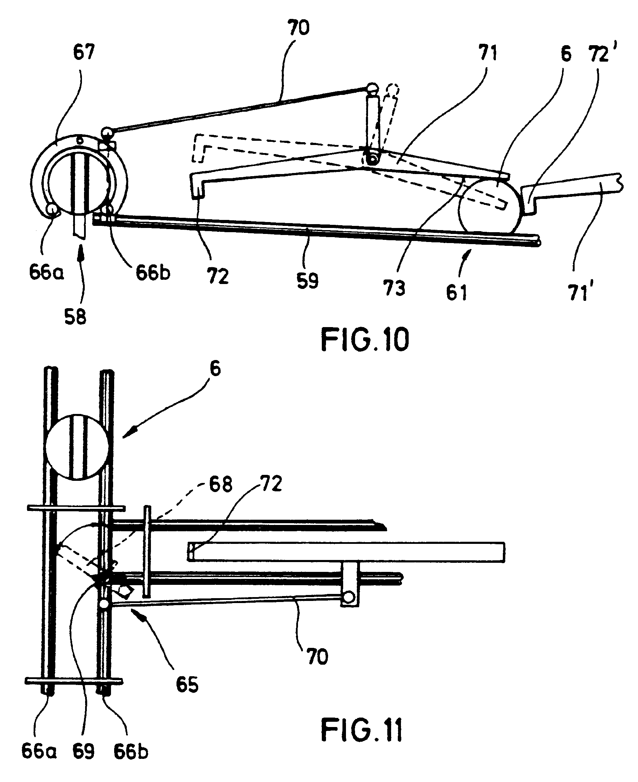

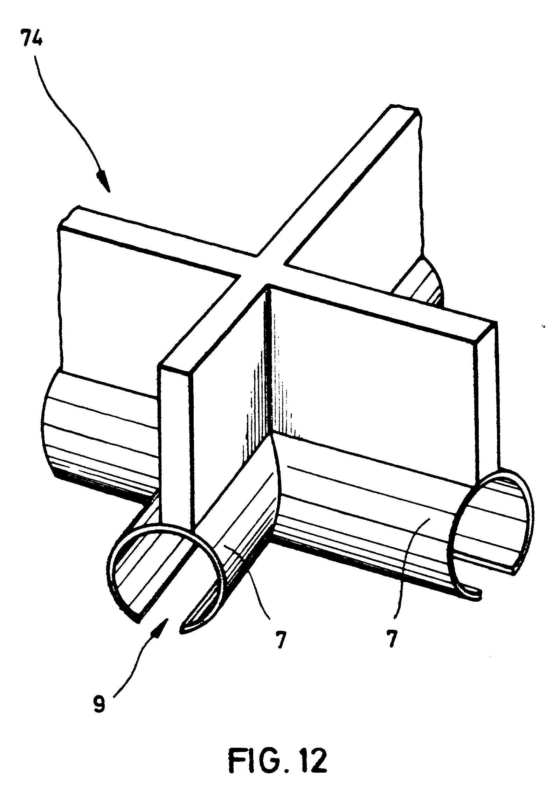

Aus den Fig. 10 und 11 ist in Seitenansicht bzw. Draufsicht eine Weiche 65 ersichtlich, wie sie beispielsweise zur Verbindung der Zulieferstrecke 58 bzw. Abzugsstrecke 62 mit einer der Querschienen 59 in Fig. 8 verwendet werden kann. Die Zulieferstrecke 58 besteht im dargestellten Ausführungsbeispiel aus einer Schiene 66, die zwei parallel nebeneinander angeordnete Stäbe 66a bzw. 66b enthält, die mit im Abstand zueinander angeordneten Bügeln 67 miteinander verbunden sind. Die Bügel 67 umschließen einen teilkreisförmigen Querschnitt, in dem beispielsweise das Laufmittel 6 mit seinen beiden Halbkugelschalen 13 laufen kann. Auch die Querschiene 59 ist analog ausgebildet, wobei die Stäbe der Querschiene 59 direkt an den anliegenden Stab 66b der Zulieferstrecke 58 stoßen. Der anliegende Stab 66b ist im Stoßbereich durchschnitten und bildet einen Teilstab 68, der um eine Achse 69 aus seiner fluchtenden Ausrichtung mit dem Stab 66b in die gestrichelt gezeichnete Anlage am anderen Stab 66a verschwenkt werden kann. Am Teilstab 68 ist ein Zughebel 70 gelenkig befestigt, dessen anderes Ende mit einer Wippe 71 verbunden ist. Ein Ende der Wippe 71 weist einen Anschlag 72 und das zweite Ende der Wippe weist eine Betätigungsfläche 73 auf, die in der anderen Stellung der Wippe in den Weg des Laufmittels 6 ragt. Die Wippe 71 ist derart ausbalanciert, daß sie sich mit ihrer Betätigungsfläche 73 auf einem Laufmittel 6 abstützt und in die andere Stellung verkippt, wenn das Laufmittel unter der Betätigungsfläche 73 entfernt wird. Anschließend an die Betätigungsfläche 73 ist eine weitere Wippe 71' mit einem in einer Stellung der Wippe 71' in den Weg des Laufmittels 6 auf der Querschiene 59 ragenden Anschlag 72' vorgesehen, der im vorliegenden Falle den Reserveplatz 61 beschreibt. Weitere dem Anschlag 72' und der Wippe 71' entsprechende Anschläge und Wippen sind für jeden Spulenplatz 60 vorgesehen.

Wird nun beispielsweise der Anschlag 72' der Wippe 71' angehoben, so rollt das sich auf dem Reserveplatz 61 befindende Laufmittel 6 auf der schrägen Querschiene 59 nach rechts, so daß das mit der Betätigungsfläche 73 versehene Ende der Wippe 71 herabfällt. Dadurch wird sowohl der Anschlag 72 angehoben als auch die Weiche 65 durch Verschwenken des Teilstabes 68 geöffnet. Damit wird das nächstfolgende, auf der Zulieferstrecke 58 ankommende Laufmittel 6 in die Querschiene 59 eingeleitet und rollt unter Anhebung der Betätigungsfläche 73 bis an den durch das in Förderrichtung vorlaufende Laufmittel wieder abgesenkten Anschlag 72'. Damit senkt sich jedoch auch der Anschlag 72 und der Teilstab 68 wird in seine fluchtende Ausrichtung mit dem Stab 66b zurückverschwenkt, so daß die Weiche 65 geschlossen wird.

Fig. 12 zeigt eine Kreuzungsstelle 74, wie sie beispielsweise zum Kreuzen der Querschienen 59 mit den zusätzlichen Längsschienen 63 in Fig. 8 oder für eine Verbindung zwischen der Querschiene und der Zuliefer- bzw. Abzugsstrecke verwendet werden kann. Im dargestellten Ausführungsbeispiel sind als Schienen die rohrförmigen Schienen 7 aus Fig. 1 vorgesehen, wobei für die Kreuzungsstelle 74 jeweils vier Stücke dieser Schienen im gewünschten Winkel zusammengeschweißt wurden. Damit kreuzen sich ihre Schlitze 9 im Mittelpunkt, so daß alle als Innenläufer ausgebildeten Laufmittel durchlaufen können.

Eine analoge Kreuzungsstelle kann beispielsweise durch vier Paare der in den Fig. 10 und 11 dargestellten Schienenstäbe oder durch vier Stücke des Schienenprofils 50 aus Fig. 7 hergestellt werden. Werden z.B. nur drei oder mehr als vier Anschlüsse benötigt, so kann selbstverständlich die Anzahl der verwendeten Schienenstücke entsprechend verringert oder erhöht werden.

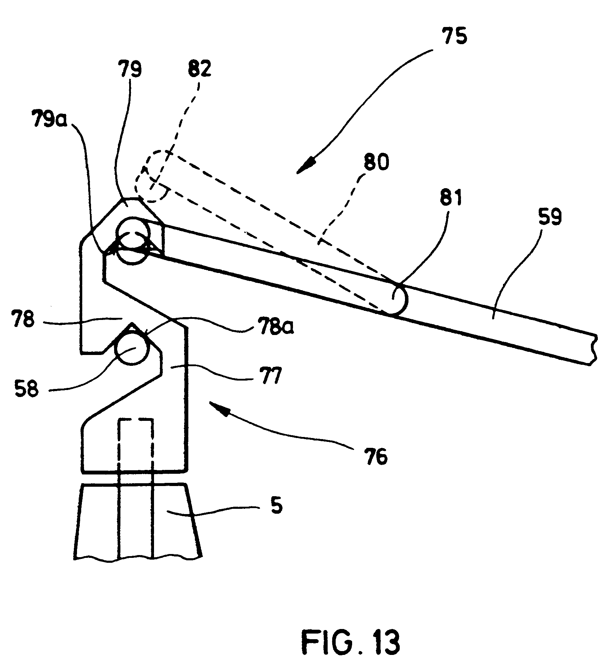

In Fig. 13 ist eine weitere Weiche 75 ersichtlich, wie sie beispielsweise zur Verbindung zwischen der Zufuhrstrecke 58 und der Querstrecke 59 aber auch zwischen der Querstrecke 59 und der Abzugsstrecke 62 oder an anderen geeigneten Stellen verwendet werden kann. Die Weiche 75 ist speziell auf die Verwendung eines weiteren Laufmittels 76 abgestimmt. Das Laufmittel 76 weist ein Tragteil 77 auf, das mit Hilfe eines der bereits beschriebenen, nicht nochmals gezeichneten Halteteile mit der Spulenhülse 2 verbunden ist. Das Tragteil 77 weist in Seitenansicht eine im wesentlichen S-förmige Gestalt mit zwei übereinanderliegenden, in entgegengesetzte Richtungen weisenden Armen 78 und 79 auf. Am unteren, dem Halteteil 5 benachbarten Arm 78 ist eine nach unten weisende, dachförmige Lauffläche 78a und am Arm 79 eine ebenfalls nach unten weisende, dachförmige weitere Eingriffsfläche 79a vorgesehen. Die Lauffläche 78a und die Eingriffsfläche 79a sind derart angeordnet, daß sie bei frei hängender Spule senkrecht über dem Schwerpunkt liegen. Die dachförmige Lauffläche 78a des unteren Armes 78 ist zum Eingriff mit einer einen runden Querschnitt aufweisenden Schiene der Zulieferstrecke 58 ausgebildet. Das Laufmittel 76 ist derart auf der Zulieferstrecke 58 abgehängt, daß der Arm 78 von den Querschienen 59 weg- und der Arm 79 auf die Querschienen 59 hinweist.

Die Weiche 75 weist ein Schienenstück 80 auf, das um eine Drehachse 81 schwenkbar an dem der Zulieferstrecke 58 zugewandten, freien Ende der Querschiene 59 angelenkt ist. Das Schienenstück 80 ist mit einer stabförmigen Verlängerung 82 versehen, die sich im wesentlichen rechtwinklig zum Schienenstück 80 erstreckt, jedoch von ihrer Verbindung am Schienenstück 80 schräg nach unten in Richtung auf die Zulieferstrecke 58 verläuft.

Das Schienenstück 80 mit der Verlängerung 82 ist um die waagerecht liegende Drehachse 81 aus der in Fig. 13 gestrichelt gezeichneten Stellung in die durchgezogene Stellung und zurück verschwenkbar. Befindet sich das Schienenstück 80 mit der Verlängerung 82 in der durchgezogen gezeichneten Stellung, so ragt die Verlängerung 82 mit ihrem freien Ende unter den Arm 79 eines ankommenden Laufmittels 76. Wird das Laufmittel 76 weiter in Richtung auf das Schienenstück 80 verschoben, beispielsweise durch einen Antrieb, so gleitet die Eingriffsfläche 79a auf der Schräge der Verlängerung 82 nach oben, so daß das Laufmittel 76 angehoben wird und seine Lauffläche 78a außer Eingriff mit der Zulieferstrecke 58 kommt. Bei einem weiteren Antrieb gelangt das Laufmittel 76 unter einer Drehung um 90° auf das Schienenstück 80 und gleitet von dort auf die Querschiene 59.

Befindet sich das Schienenstück 80 mit seiner Verlängerung 82 in der gestrichelt gezeichneten Stellung, so kann das Laufmittel 76 ungehindert auf der Zulieferstrecke 58 durchlaufen. Die Verschwenkbewegung des Schienenstückes 80 und der Verlängerung 82 kann analog der in den Fig. 10 und 11 gezeichneten Weiche durch eine entsprechend angepaßte Wippe geschehen.

In Abwandlung der beschriebenen und gezeichneten Ausführungsbeispiele können alle in den Zeichnungen dargestellten Einzelheiten untereinander ausgetauscht werden. So können beispielsweise auch die Laufmittel nach den Fig. 1, 4, 5 und 7 mit einem Halter als Halteteil ausgebildet sein. Eine einzelne weitere Eingriffsfläche oder auch zwei, symmetrisch um die Mittellinie angeordnete, weitere Eingriffsflächen können auch in den anderen beschriebenen Laufmitteln vorgesehen werden. Auch die Abstandshalter können für jede der beschriebenen Spulen eingesetzt werden. Auch eignet sich jedes der beschriebenen Schienenprofile für das Laufmittel der Spule für eine Anbringung an einem normalen Trolley.

Selbstverständlich kann als Laufmittel für die Spule auch einer der bekannten Trolleybügel mit zwei im Winkel zueinander angeordneten Laufrollen (Fig. 5) verwendet werden.

**Patentansprüche**

1. Hängefördersystem, insbesondere für Spinnereibetriebe, mit einer Schiene zum Fördern einer in eine Verarbeitungsmaschine einsetzbaren Spule, **dadurch gekennzeichnet**, daß der Spule (1) ein eigenes Laufmittel (6, 29, 36, 43, 46) zugeordnet ist, mit dem die Spule (1) für sich unmittelbar auf der Schiene (7, 31, 50, 66) transportierbar ist und das an der in die Verarbeitungsmaschine (53, 54, 55) eingesetzten Spule (1) verbleibt.

2. Hängefördersystem nach Anspruch 1, **dadurch**

**gekennzeichnet**, daß das Laufmittel (6, 29, 36, 43, 46) ein mit einer Hülse (2) der Spule (1) verbundenes Halteteil (5, 45, 47) und ein Tragteil (12, 30, 37, 44, 48) mit einer Lauffläche (11a, b, 32a, b) zum Eingriff mit einer Laufbahn (10a, b, 33a, b, 49a, b) der Schiene (7, 31, 50, 66) enthält.

3. Hängefördersystem nach einem der Ansprüche 1 oder 2, **dadurch gekennzeichnet**, daß das Laufmittel (6, 29, 36) mit einer Hülse (2) der Spule (1) in Rasteingriff steht.

4. Hängefördersystem nach einem der Ansprüche 1 bis 3, **dadurch gekennzeichnet**, daß das Laufmittel (6, 29, 36, 43, 46) eine weitere Eingriffsfläche (34a, 38a) aufweist.

5. Hängefördersystem nach Anspruch 4, **dadurch gekennzeichnet**, daß die weitere Eingriffsfläche (34a, 38a) als Reibfläche zum Eingriff mit einem Reibseil (35) eines Antriebs ausgebildet ist.

6. Hängefördersystem nach einem der Ansprüche 4 oder 5, **dadurch gekennzeichnet**, daß sich die weitere Eingriffsfläche (38a) quer zur Schiene (31) erstreckt.

7. Hängefördersystem nach einem der Ansprüche 1 bis 6, **dadurch gekennzeichnet**, daß das Laufmittel (46) eine sich koaxial zur Mittellinie der Spule (1) erstreckende Durchgangsbohrung (52) aufweist.

8. Hängefördersystem nach einem der Ansprüche 1 bis 7, **dadurch gekennzeichnet**, daß das Laufmittel (6, 29, 36 43, 46) eine Koppelungsvorrichtung (23) enthält.

9. Hängefördersystem nach einem der Ansprüche 1 bis 8, **dadurch gekennzeichnet**, daß am Laufmittel (6, 29, 36, 43, 46) ein Abstandshalter (19, 26) mit mindestens einer Anschlagsfläche (22, 27a, 28a) angeordnet ist.

10. Hängefördersystem nach Anspruch 9, **dadurch gekennzeichnet**, daß die Anschlagfläche (22) an einem Ring (20) angeordnet ist, der über Stege (21) mit dem Laufmittel (6, 29, 36, 43, 46) verbunden ist.

11. Hängefördersystem nach einem der Ansprüche 9 oder 10, **dadurch gekennzeichnet**, daß ein erster Bereich (27a) der Anschlagfläche einen größeren Abstand zur Mittellinie der Spule (1) aufweist als ein zweiter Bereich (28a) der Anschlagfläche.

12. Hängefördersystem nach Anspruch 11, **dadurch**

**gekennzeichnet**, daß die Anschlagfläche (27a, 28a) an jeweils mindestens einem Vorsprung (27) bzw. mindestens einer Ausnehmung (28), die zueinander deckungsgleich sind, vorgesehen ist, wobei der erste Bereich (27a) an der Stirnfläche des Vorsprungs (27) und der zweite Bereich (28a) an der Grundfläche der Ausnehmung (28) vorgesehen ist.

13. Hängefördersystem nach Anspruch 12, **dadurch gekennzeichnet**, daß der Abstandshalter (26) im Bereich des Vorsprungs (27) oder der Ausnehmung (28) elastisch verformbar ausgebildet ist, und der Vorsprung (27) in die Ausnehmung (28) einrastbar ist.

14. Hängefördersystem nach einem der Ansprüche 1 bis 13, **dadurch gekennzeichnet**, daß die Schiene (7, 31, 50, 66) an einem weiteren Laufmittel, insbesondere an einem Trolley (39), angeordnet ist.

15. Hängefördersystem nach einem der Ansprüche 1 bis 14, **dadurch gekennzeichnet,** daß zwischen der Spule (1) und dem Laufmittel (6, 29, 36, 43, 46) ein lösbarer Spulenhalter (45) vorgesehen ist.

16. Hängefördersystem nach einem der Ansprüche 1 bis 15, **dadurch gekennzeichnet**, daß die Schiene (7, 50, 66) zwei parallel zueinander angeordnete Laufbahnen (10a, b, 49a, b, 66a, b) enthält, und das Laufmittel (6, 47) ein die Laufbahnen (10a, b, 49a, 66a, b) von innen nach außen übergreifendes Profil aufweist.

17. Hängefördersystem nach Anspruch 16, **dadurch gekennzeichnet**, daß die Schiene aus zwei parallel und im Abstand zueinander verlaufenden Stäben (66a, b) besteht und eine Weiche (65) in Form eines aus einem der Stäbe (66b) ausgeschnittenen und um eine Drehachse (69) schwenkbar befestigten Teilstabes (68) enthält.

18. Hängefördersystem nach einem der Ansprüche 16 oder 17, **dadurch gekennzeichnet**, daß eine Weiche (65) vorgesehen ist, die durch ein vom Laufmittel (6, 46) betätigbares Hebelgestänge (70, 71) verschwenkbar ist.

19. Hängefördersystem nach einem der Ansprüche 16 bis 18, **dadurch gekennzeichnet**, daß eine Kreuzungsstelle (74) aus mindestens zwei im Winkel zueinander zusammengesetzten Schienen (7, 50) vorgesehen ist.

20. Hängefördersystem nach einem der Ansprüche 1 bis 19, **gekennzeichnet durch** seine Verwendung für eine Quereinfahrt von Spulen (2) in ein Gatter (64) einer Spinnmaschine (55) mit einer Mehrzahl quer und längs zur Spinnmaschine in Reihe angeordneter Spulenplätze (60).

21. Hängefördersystem nach Anspruch 20, **dadurch gekennzeichnet**, daß für jede Querreihe von Spulenplätzen (60) eine Querschiene (59) vorgesehen ist.

22. Hängefördersystem nach Anspruch 21, **dadurch gekennzeichnet**, daß jede Querschiene (59) mit einer gemeinsamen Abzugsstrecke (62) verbunden ist.

23. Hängefördersystem nach einem der Ansprüche 21 oder 22, **dadurch gekennzeichnet,** daß jede Querschiene (59) mit einer gemeinsamen Zulieferstrecke (58) verbunden ist.

24. Hängefördersystem nach Anspruch 23, **dadurch gekennzeichnet**, daß die Zulieferstrecke (58) in einer geschlossenen Bahn um die Spinnmaschine (55) herumgeführt ist.

25. Hängefördersystem nach einem der Ansprüche 21 bis 24, **dadurch gekennzeichnet**, daß die Querschienen (59) untereinander durch Längsschienen (63) verbunden sind.

26. Hängefördersystem nach einem der Ansprüche 21 bis 25, **dadurch gekennzeichnet**, daß auf der Querschiene (59) für jeden Spulenplatz (60) ein lösbarer Anschlag (72) für das Laufmittel (6, 29, 36, 43, 46) vorgesehen ist.

27. Hängefördersystem nach Anspruch 26, **dadurch gekennzeichnet**, daß der Anschlag (72) durch ein sich in Förderrichtung vor dem Anschlag (72) befindendes Laufmittel (6, 29, 36, 43, 46) betätigbar ist.

28. Spule für textile Fäden oder Faserstränge, zum auswechselbaren Einsetzen in eine Verarbeitungsmaschine, insbesondere eine Spinnmaschine, **gekennzeichnet durch** ein eigenes, ihr zugeordnetes Laufmittel (6, 29, 36, 43, 46), mit dem die Spule (1) für sich unmittelbar auf einer Schiene (7, 31, 50, 66) transportierbar ist und die an der in die Verarbeitungsmaschine (53, 54, 55) eingesetzten Spule (1) verbleibt.

**Claims**

1. Suspended transport system, in particular for spinning mills, with a track for transporting a bobbin which can be inserted into a machine, characterized in that the bobbin (1) has an individual slider (6, 29, 36, 43, 46) whereby the bobbin (1) can be individually transported directly on the track (7, 31, 50, 66) and which remains on the bobbin (1) when it is inserted into the machine (53, 54, 55).

2. Suspended transport system according to Claim 1, characterized in that the slider (6, 29, 36, 43, 46) has a holder part (5, 45, 47) connected to a tube (2) of the bobbin (1) and a carrier part (12, 30, 37, 44, 42) with a sliding face (11a, b, 32a, b) for engaging a slide way (10a, b, 33a, b, 49a, b) of the track (7, 31, 50, 66).

3. Suspended transport system according to one of Claims 1 or 2, characterized in that the slider (6, 29, 36) is snap-locked into a tube (2) of the bobbin (1).

4. Suspended transport system according to one of Claims 1 to 3, characterized in that the slider (6, 29, 36, 43, 46) has an additional engagement face (34a, 38a).

5. Suspended transport system according to Claim 4, characterized in that the additional engagement face (34a, 38a) is formed as a friction face for engaging a friction rope (35) of a drive system.

6. Suspended transport system according to one of Claims 4 or 5, characterized in that the additional engagement face (38a) extends at right angles to the track (31).

7. Suspended transport system according to one of Claims 1 to 6, characterized in that the slider (46) has a through bore (52) extending coaxially with the centreline of the bobbin (1).

8. Suspended transport system according to one of Claims 1 to 7, characterized in that the slider (6, 29, 36, 43, 46) has a coupling device (23).

9. Suspended transport system according to one of Claims 1 to 8, characterized in that a spacer (19, 26) with at least one bumper face (22, 27a, 28a) is arranged on the slider (6, 29, 36, 43, 46).

10. Suspended transport system according to Claim 9, characterized in that the bumper face (22) is arranged on a ring (20) connected to the slider (6, 29, 36, 43, 46) by struts (21).

11. Suspended transport system according to one of Claims 9 or 10, characterized in that a first region (27a) of the bumper face is at a greater distance from the centreline of the bobbin (1) than a second region (28a) of the bumper face.

**12.** Suspended transport system according to Claim 11, characterized in that the bumper face (27a, 28a) is provided on at least one projection (27) and/or at least one recess (28), with matching profiles, the first region (27a) being provided on the front face of the projection (27) and the second region (28a) being provided on the bottom face of the recess (28).

**13.** Suspended transport system according to Claim 12, characterized in that the spacer (26) is made elastically deformable in the region of the projection (27) or recess (28), and the projection (27) can be snapped into the recess (28).

**14.** Suspended transport system according to one of Claims 1 to 13, characterized in that the rail (7, 31, 50, 66) is mounted on another sliding or running gear, in particular on a trolley (39).

**15.** Suspended transport system according to one of Claims 1 to 14, characterized in that a detachable bobbin-holder (45) is provided between the bobbin (1) and the slider (6, 29, 36, 43, 46).

**16.** Suspended transport system according to one of Claims 1 to 15, characterized in that the track (7, 50, 66) has two parallel slide ways (10a, b, 49a, b, 66a, b), and the slider (6, 47) has a profile which projects outwards over the slide ways (10a, b, 49a, b, 66a, b).

**17.** Suspended transport system according to Claim 16, characterized in that the track consists of two bars (66a, b) extending parallel with, and spaced apart from, one another, and has a points mechanism (65) in the form of a part bar (68) cut out of one of the bars (66b) [of the track] and mounted so as to be capable of pivoting about a hinge (69).

**18.** Suspended transport system according to one of Claims 16 or 17, characterized in that a points mechanism (65) is provided, which can be pivoted by a lever rod (70, 71) which can be actuated by the slider (6, 46).

**19.** Suspended transport system according to one of Claims 16 to 18, characterized in that a crossing (74) is provided, made from at least two rails (7, 50) assembled at an angle to one another.

**20.** Suspended transport system according to one of Claims 1 to 19, characterized by its application to a transverse entry of bobbins (2) into a creel (64) of a spinning frame (55) with a plurality of bobbin spaces (60) located In longitudinal and transverse rows.

**21.** Suspended transport system according to Claim 20, characterized in that a transverse track (59) is provided for every transverse row of bobbin spaces (60).

**22.** Suspended transport system according to Claim 21, characterized in that every transverse track (59) is connected to a common discharge line (62).

**23.** Suspended transport system according to one of Claims 21 or 22, characterized In that every transverse track (59) is connected to a common feed line (58).

**24.** Suspended transport system according to Claim 23, characterized in that the feed line (58) is routed in a closed loop around the spinning frame (55).

**25.** Suspended transport system according to one of Claims 21 to 24, characterized in that the transverse tracks (59) are connected to one another by longitudinal tracks (63).

**26.** Suspended transport system according to one of Claims 21 to 25, characterized in that a releasable stop (72) for the slider (6, 29, 36, 43, 46) is provided on the transverse track (59) for each bobbin space (60).

**27.** Suspended transport system according to Claim 26, characterized in that the stop (72) can be operated by a slider (6, 29, 36, 43, 46) ahead of the stop (72), that is to say ahead considered in the conveying direction.

**28.** Bobbin for textile yarns or rovings for replaceable insertion into a machine, in particular a spinning frame, characterized by an independent, individual slider (6, 29, 36, 43, 46) whereby the bobbin (1) can be individually transported directly on a track (7, 31, 50, 66) and which remains on the bobbin (1) when it is inserted into the machine (53, 54, 55).

**Revendications**

1. - Système de transport suspendu, en particulier pour des filatures, comprenant un rail pour le transport d'une bobine qui peut être mise en place dans une machine de traitement, **caractérisé en ce** qu'à la bobine (1) est associé un moyen de roulement (6, 29, 36, 43, 46) particulier par lequel la bobine (1) peut être transportée individuellement sur le rail (7, 31, 50, 66) et qui reste sur la bobine (1) mise en place dans la machine de traitement (53, 54, 55).

2. - Système de transport suspendu selon la revendication 1, caractérisé en ce que le moyen de roulement (6, 29, 36, 43, 46) comprend un élément de retenue (5, 45, 47) couplé avec la canette (2) de la bobine (1) et un élément de support (12, 30, 37, 44, 48) avec une surface de roulement (11a, b, 32a, b) pour la coopération avec une voie de roulement (10a, b, 33a, b, 49a, b) du rail (7, 31, 50, 66).

3. - Système de transport suspendu selon l'une des revendications 1 ou 2, caractérisé en ce que le moyen de roulement (6, 29, 36) est encliqueté sur une canette (2) de la bobine (1).

4. - Système de transport suspendu selon l'une des revendications 1 à 3, caractérisé en ce que le moyen de roulement (6, 29, 36, 43, 46) comporte une surface de prise supplémentaire (34a, 38a).

5. - Système de transport suspendu selon la revendiration 4, caractérisé en ce que la surface de prise supplémentaire (34a, 38a) est conformée en surface frottante pour la coopération avec un câble de friction (35) d'un mécanisme d'entraînement.

6. - Système de transport suspendu selon l'une des revendications 4 ou 5, caractérisé en ce que la surface de prise supplémentaire (38a) s'étend transversalement par rapport au rail (31).

7. - Système de transport suspendu selon l'une des revendications 1 à 6, caractérisé en ce que le moyen de roulement (46) présente un trou de massage (52) qui s'étend coaxialement par rapport à l'axe médian de la bobine (1).

8. - Système de transport suspendu selon l'une des revendications 1 à 7, caractérisé en ce que le moyen de roulement (6, 29, 36, 43, 46) comprend un dispositif d'accouplement (23).

9. - Système de transport suspendu selon l'une des revendications 1 à 8, caractérisé en ce que sur le moyen de roulement (6, 29, 36, 43, 46) est monté un écarteur (19, 26) avec au moins une surface d'arrêt (22, 27a, 28a).

10. - Système de transport suspendu selon la revendication 9, caractérisé en ce que la surface d'arrêt (22) est disposée sur un anneau (20) qui est relié au moyen de roulement (6, 29, 36, 43, 46) par l'intermédiaire de barrettes (21).

11. - Système de transport suspendu selon l'une des revendications 9 ou 10, caractérisé en ce qu'une première zone (27a) de la surface d'arrêt se situe par rapport à l'axe médian de la bobine (1) à une distance plus grande qu'une seconde zone (28a) de ladite surface d'arrêt.

12. - Système de transport suspendu selon la revendication 11, caractérisé en ce que la surface d'arrêt (27a, 28a) est respectivement prévue sur au moins une saillie (27) ou sur au moins un évidement (28) concordants, la première zone (27a) étant prévue sur la face frontale de la saillie (27) et la seconde zone (28a), au fond de l'évidement (28).

13. - Système de transport suspendu selon la revendication 12, caractérisé en ce que l'écarteur (26) est élastiquement déformable au moins dans la région de la saillie (27) ou de l'évidement (28), et que la saillie (27) peut prendre l'encoche dans l'évidement (28).

14. - Système de transport suspendu selon l'une des revendications 1 à 13, caractérisé en ce que le rail (7, 31, 50, 66) est monté sur un moyen de roulement supplémentaire, en particulier sur un trolley (39).

15. - Système de transport suspendu selon l'une des revendications 1 à 14, caractérisé en ce qu'un support de bobine (45) amovible est prévu entre la bobine (1) et le moyen de roulement (6, 29, 36, 43, 46).

16. - Système de transport suspendu selon l'une des revendications 1 à 15, caractérisé en ce que le rail (7, 50, 66) comprend deux voies de roulement (10a, b, 49a, b, 66a, b) disposées parallèlement l'une par rapport à l'autre, et que le moyen de roulement (6, 47) présente un profil qui recouvre les voies de roulement (10a, b, 49a, b, 66a, b) de l'intérieur vers l'extérieur.

17. - Système de transport suspendu selon la revendication 16, caractérisé en ce que le rail se compose de deux barres (66a, b) qui s'étendent parallèlement à distance l'une par rapport à l'autre, et comporte une aiguille (65) sous la forme d'une barre partielle (68) séparée de l'une des barres (66b) et montée de manière à pouvoir pivoter autour d'un axe de rotation (69).

18. - Système de transport suspendu selon l'une des revendications 16 ou 17, caractérisé en ce qu'il comprend une aiguille (65) qui peut être pivotée au moyen d'un système de leviers (70, 71) qui peut être actionné par le moyen de roulement (6, 46).

19. - Système de transport suspendu selon l'une des revendications 16 à 18, caractérisé en ce qu'il comprend un croisement (74) constitué d'au moins deux rails (7, 50) assemblés de manière à former un angle entre eux.

20. - Système de transport suspendu selon l'une des revendications 1 à 19, caractérisé en ce qu'il est utilisé pour un engagement transversal de bobines (2) dans un râtelier (64) d'un métier à filer (55) avec une pluralité de places de bobines (60) disposées en rangées transversalement et longitudinalement par rapport au métier à filer.

21. - Système de transport suspendu selon la revendication 20, caractérisé en ce que pour chaque rangée transversale de places de bobines (60) est prévu un rail transversal (59).

22. - Système de transport suspendu selon la revendication 21, caractérisé en ce que chaque rail transversal (59) est raccordé à une voie d'évacuai.ion (62) commune.

23. - Système de transport suspendu selon l'une des revendications 21 ou 22, caractérisé en ce que chaque rail transversal (59) est raccordé à une voie d'amenée (58) commune.

24. - Système de transport suspendu selon la revendication 23, caractérisé en ce que la voie d'amenée (58) passe en boucle fermée autour du métier à filer (55).

25. - Système de transport suspendu selon l'une des revendications 21 à 24, caractérisé en ce que les rails transversaux (59) sont reliés entre eux par des rails longitudinaux (63).

26. - Système de transport suspendu selon l'une des revendications 21 à 25, caractérisé en ce que sur le rail transversal (59) pour chaque place de bobine (60) est prévue une butée (72) amovible pour le moyen de roulement (6, 29, 36, 43, 46).

27. - Système de transport suspendu selon la revendication 26, caractérisé en ce que la butée (72) peut être actionnée par un moyen de roulement (6, 29, 36, 43, 46) situé dans la direction de transport devant la butée (72).

28. - Bobine pour des fils ou écheveaux de fibres textiles pour la mise en place interchangeable dans une machine de traitement, en particulier dans un métier à filer, caractérisée en ce qu'elle comporte un moyen de roulement particulier (6, 29, 36, 43, 46) qui lui est associé et par lequel ladite bobine (1) peut être transportée directement et individuellement sur un rail (7, 31, 50, 66) et qui reste sur la bobine (1) mise en place dans la machine de traitement (53, 54, 55).

FIG. 1

EP 0 343 399 B1

FIG. 2

FIG. 3

FIG.4

FIG.5

EP 0 343 399 B1

FIG. 6

FIG. 7

FIG.8

FIG.9

FIG.10

FIG.11

FIG. 12

FIG. 13